Europäisches Patentamt

European Patent Office

Office européen des brevets

(11) veröffentlichungsnummer: **0 016 733**

**A1**

(12) **EUROPÄISCHE PATENTANMELDUNG**

(21) Anmeldenummer: **80810094.5**

(22) Anmeldetag: **21.03.80**

(51) Int. Cl.³: **C 09 D 5/02**
**C 09 D 3/727**
**//(C09D5/02, C08G12/12)**

(30) Priorität: **27.03.79 CH 2827/79**

(43) Veröffentlichungstag der Anmeldung:
**01.10.80 Patentblatt 80.'20**

(84) Benannte Vertragsstaaten:
**BE CH DE FR GB IT NL SE**

(71) Anmelder: **CIBA-GEIGY AG**
**Patentabteilung Postfach**
**CH-4002 Basel(CH)**

(72) Erfinder: **Renner, Alfred, Dr.**
**Entenweidstrasse 18**
**CH-4142 Münchenstein(CH)**

(72) Erfinder: **Margotte, Werner**
**Leimenweg 6**
**CH-4411 Lupsingen(CH)**

(54) **Organische Weisspigmente enthaltende, wässrige Dispersionsfarben.**

(57) Die erfindungsgemässen wässrigen Dispersionsfarben enthalten UF-Weisspigmente mit ganz charakteristischen physikalischen Eigenschaften. Gegenüber bekannten wässrigen Dispersionsfarben, welche neben $TiO_2$ nur bis zu 20 Gew.-% am gesamten Weisspigment UF-Weisspigmente enthalten können, kann erfindungsgemäss das $TiO_2$ bis zu 100% durch das UF-Weisspigment ersetzt werden. Die resultierenden Anstriche sind licht- und wetterbeständig und scheuerfest.

EP 0 016 733 A1

Croydon Printing Company Ltd.

CIBA-GEIGY AG            3-12279

Basel Schweiz

## Organische Weisspigmente enthaltende, wässrige Dispersionsfarben

Die Erfindung betrifft wässrige Dispersionsfarben, welche als Weisspigmente Harnstoff-Formaldehyd-Kondensationspolymere (UF-Weisspigmente) enthalten. In den US-Patentschriften 3.737.404 und 3.836.495 sind bereits wässrige Emulsionsfarben beschrieben worden, welche spezielle UF-Polymere mit einer spezifischen Oberfläche von 15 bis 100 $m^2$/g und einem Schüttgewicht von weniger als 100 g/l als Weisspigmente zusätzlich zu $TiO_2$ enthalten. Auffallend ist, dass in diesen Emulsionsfarben der Anteil der UF-Weisspigmente am gesamten Weisspigment nur 2 bis 20 Gew.-% beträgt. Der Grund für die Begrenzung liegt offensichtlich darin, dass bei weiterem Ersatz von $TiO_2$ durch das UF-Weisspigment (d.h. bei Erhöhung der Konzentration auf über 20 Gew.-%) eine so starke Verdickung und ungünstige rheologische Veränderung resultiert, dass die dickflüssige Masse nicht mehr für Anstrichzwecke applizierbar ist. Die in den zitierten Patentschriften beschriebenen UF-Polymeren spielen somit die Rolle eines Extenders für Titandioxid. In Anbetracht dieses Standes der Technik musste man annehmen, dass es nicht möglich sein wird, Dispersionsfarben mit hoher Deckkraft und hohem Weissgrad herzustellen, in denen UF-Polymere nicht die Rolle des Extenders, sondern die des Weisspigments spielen und die das Titandioxid vollständig oder zu hohen Anteilen in solchen Anstrichen zu ersetzen vermögen. - Eine Substitution von Titandioxid durch organische Weisspigmente wäre aber aus folgenden Gründen wünschenswert:

- 2 -

Es ist bereits heute eine Verknappung hochwertiger Titanerze (Rutil, Ilmenit, Brookit, Anatas) spürbar und die weitgehende Erschöpfung deren Vorkommen vorauszusehen. Im Sinne der Ressourcenschonung erscheint es sinnvoll, Titanerze vorwiegend als metallurgische Rohstoffe zu bewahren, anstatt sie zu Weisspigmenten zu verarbeiten, die der Verwitterung und raschem Verschleiss in Anstrichen preisgegeben werden. Die Rohstoffbasis für UF-Weisspigmente (Erdgas, Petrol, Kohle) erscheint hingegen für viel längere Zeitläufe gesichert. Aber auch eine Reihe anwendungstechnischer Vorteile lassen den Ersatz von $TiO_2$ in Dispersionsfarben durch UF-Pigmente angezeigt erscheinen: Sein hohes spezifisches Gewicht von 4,26 $g/cm^3$ macht nicht nur besondere Zusätze erforderlich, um das Absetzen in der Dispersionsfarbe zu verhindern, sondern erhöht auch das spezifische Gewicht der Farbe. Da der Farbauftrag auf die Verteilung eines bestimmten Farbvolumens auf eine bestimmte Fläche hinausläuft, kann man mit einer spezifisch leichteren Farbe, die UF-Weisspigment mit $d_{20}$ = 1,40 enthält, eine grössere Fläche bestreichen. - Soll ein kohärenter Anstrichfilm nach der Trocknung entstehen, dürfen Pigmente und Füllstoffe einen bestimmten Volumenanteil des Films nicht überschreiten. Man nennt dies die kritische Pigmentvolumenkonzentration (PVK). Auf Grund der spezifischen Gewichte nehmen 330 g UF-Weisspigment das gleiche Volumen wie 1 kg Rutil ein oder 1 kg UF-Pigment nimmt das gleiche Volumen wie 1 kg $TiO_2$ + 1,25 kg $CaCO_3$ ein. Die letztgenannte Substitution führt zu Farben gleicher Deckkraft und Weisse, wie in den Ausführungsbeispielen gezeigt wird. Da UF-Weisspigmente wesentlich billiger als $TiO_2$ hergestellt werden können, resultiert daraus ein grosser Kostenvorteil für den Farbhersteller.

Selbstverständlich gelingt es nicht, UF-Pigmente herzustellen, die einen ähnlich hohen Brechungsindex wie Titandioxid aufweisen (2,6-2,9). Umso überraschender ist daher, dass es möglich ist, Dispersionsfarben von vergleichbarer Deckkraft und Weisse mit UF-Pigmenten zu machen, die nur einen Brechungsindex von 1,65 - also ähnlich wie die polymeren Bindemittel aufweisen. Es wurde gefunden, dass bestimmte Partikel- und Agglomeratsstrukturen hierfür massgebend sind,

- 3 -

die sich durch die Parameter Partikeldurchmesser, Porenvolumen und Lichtstreuungskoeffizient beschreiben lassen.

Gegenstand der Erfindung sind wässrige Dispersionsfarben, enthaltend emulgierte oder suspendierte organische Bindemittel, ein festes Harnstoff-Formaldehyd-Kondensationspolymer als Weisspigment und gegebenenfalls weitere anorganische Pigmente und/oder Füllstoffe und übliche Hilfsmittel, welche dadurch gekennzeichnet sind, dass das feste Harnstoff-Formaldehyd-Kondensationspolymer

| | |
|---|---|
| einen Lichtstreuungskoeffizienten | $\geq 800 \ cm^2/g$, |
| ein Porenvolumen von | $\leq 3 \ cm^3/g$, |
| einen mittleren Primärpartikel-Durchmesser von | $0,2 - 2 \ \mu m$, |
| einen Schmelzbereich (bei Zersetzung) von | $240 - 260°C$ |
| und ein Schüttgewicht von | $> 100 \ g/l$ |

aufweist.

Als organische Bindemittel enthalten die erfindungsgemässen Dispersionsfarben die üblichen Polymeren für diese Anwendung aus der Gruppe Polyvinylacetat, Polyvinylchlorid, Polyvinylidenchlorid und die entsprechenden Copolymeren, Acryl(co)polymere , beispielsweise mit Styrol,    Styrol-Butadien-Copolymere und Butadien-Acrylnitril-Copolymere .Derartige Bindemittel liegen vorwiegend in Form von wässrigen Emulsionen, aber in einzelnen Fällen auch als Suspensionen vor. Sie können ein Bindemittel oder auch mehrere enthalten und werden entsprechend der Nomenklatur aus der Gummitechnologie als "Latex" bezeichnet.

Die erfindungsgemässen Dispersionsfarben können zusätzlich auch noch anorganische Pigmente und/oder Füllstoffe (einzeln oder im Gemisch) beispielsweise aus der Gruppe $CaCO_3$, $MgCO_3$, Kaolin, Talk, Glimmer, Zinkweiss, Schwerspat und $TiO_2$ (Rutil oder Anatas) enthalten. Ausserdem können die Dispersionsfarben auch übliche Hilfsstoffe enthalten. Derartige Hilfsstoffe sind beispielsweise Schutzkolloide, wie

- 4 -

Methylcellulose, Hydroxyethylcellulose und das Natriumsalz der Carboxymethylcellulose. Eine bekannte Carboxy-methylcellulose ist beispielsweise Tylose 4000, der Kalle A.G. (DE). Zur Erhöhung der Lagerstabilität sind nicht ionogene oberflächenaktive Substanzen wie Irgarol ND 33 ® der Ciba-Geigy AG und Ammoniumsalze niedrigviskoser Polyacrylsäuren geeignet. Eine wässrige etwa 30 %ige Lösung eines solchen Salzes ist z.B. der Pigmentverteiler A ® der BASF-A.G. Eine ähnliche Wirkung zeigt ein Polyphosphat der Handelsbezeichnung Calgon N ® der Benckiser-Knapsack GmbH (DE), welches sich sehr vorteilhaft mit dem Pigmentverteiler A ® kombinieren lässt. Calgon N ® wirkt gleichzeitig enthärtend. Auch der nicht ionogene Emulgator Emulan OC (20%-ig) der BASF AG und das oberflächenaktive Nopco 8034 ® der Diamond Shamrock Chemicals AG (CH) sind hier anzuführen. In vielen Fällen ist auch ein Gehalt an optischen Aufhellern in den erfindungsgemässen Dispersionsfarben vorteilhaft. Als Beispiel ist hier Tinopal 2 BF ® der Ciba-Geigy AG (ein 4,4'-Bis-(triazinylamino)-stilben-2,2'-disulfonsäure-Derivat) zu nennen. Durch zugesetzte oberflächenaktive Substanzen wird in vielen Fällen auch eine Schaumbildung sowohl bei der Herstellung der Dispersionsfarben als auch während des Verstreichens derselben verhindert. Weiter können die Dispersionsfarben auch $NH_3$, Lösungsmittel und Verlaufmittel sowie Konservierungsmittel (Fungi- und Biocide) enthalten.

Die zweckmässige Konzentration der gesamten Bestandteile in der jeweiligen erfindungsgemässen Dispersionsfarbe, welche nach der Anwendung den fertigen Film bilden, beträgt 50 bis 75 Gew.-%, bezogen auf die gesamte wässrige Dispersionsfarbe. In diesen gesamten Bestandteilen ohne Wasser und andere verdampfbare Stoffe liegen die Pigmente zu den organischen Bindemitteln in Gewichtsverhältnissen zwischen 1 und 10 vor.

Eine Vorzugsform der Erfindung stellen solche wässrigen Dispersionsfarben dar, welche als zusätzliches anorganisches Pigment $TiO_2$ enthalten, wobei das Gewichtsverhältnis $TiO_2$: Harnstoff-Formal-

- 5 -

dehyd-Kondensationspolymer kleiner als 4 ist. Solche Dispersionsfarben sind dann besonders für Aussenanstriche geeignet, wenn dieselben ein Gewichtsverhältnis von Pigmenten und Füllstoffen zu organischem Bindemittel von 1,5 bis 4 aufweisen.

Besonders bevozugt gemäss der Erfindung sind aber auch solche wässrigen Dispersionsfarben, welche als Weisspigment lediglich das Harnstoff-Formaldehyd-Kondensationspolymer enthalten. Diese bevorzugten Dispersionsfarben sind dann besonders für Innenanstriche geeignet, wenn in denselben das Pigment und das organische Bindemittel im Gewichtsverhältnis von 4 bis 10 vorliegen.

Die erfindungsgemässen Dispersionsfarben sind für Anstriche auf Mauerwerke, Holz, Kunstharz-gebundene Spanplatten, Tapeten, Beton und Eternit geeignet. Auch Seidenglanzfarben und Holzspachtelmassen können mit UF-Weisspigmenten versehen werden.

Als besonders überraschend bei den erfindungsgemässen Dispersionsfarben ist abschliessend noch einmal hervorzuheben, dass überhaupt UF-Weisspigmente gefunden wurden, welche zu so günstigen rheologischen Eigenschaften von wässrigen Dispersionsfarben führten, dass eine Erhöhung des UF-Weisspigmentanteils im $TiO_2$-UF-Weisspigment-Gemisch bis zu 100 Gew.-% möglich ist, ohne dass die Applizierbarkeit der Dispersionsfarben beeinträchtigt wird. Hierfür ist das Porenvolumen $<3$ $cm^3$/g eine wesentliche Voraussetzung.

Die gemäss der Erfindung als Weisspigmente verwendeten UF-Kondensationspolymere sind an sich bekannt. Diesbezüglich ist z.B. auf die DE-OS 2.547.966 hinzuwiesen wo u.a. Beispiel 2 die Herstellung eines UF-Kondensationspolymeren, welches gemäss der vorliegenden Erfindung als Weisspigment zu verwenden ist, beschreibt.

Weiter ist auch auf die Publikation von A. Renner in "Die Makromolekulare Chemie" 149, 1 bis 27 (1971) hinzuweisen, wo die

- 6 -

Herstellung der gemäss dieser Erfindung verwendbaren UF-Weisspigmente
(so beispielsweise unter Abschnitt 9.1.) beschrieben wird.

Bevorzugt werden die erfindungsgemäss verwendeten UF-Weisspigmente unter folgenden Bedingungen durch Polykondensation von
Harnstoff und Formaldehyd hergestellt: F/U-Gewichtsverhältnis =
0,85 - 1,7; Konzentration an Harnstoff und Formaldehyd: (zusammen)
20 bis 45 Gew.-%; Abwesenheit von Schutzkolloiden; Reaktionstemperatur:
20 bis 100°C; Reaktionszeit: 4 bis 5 Stunden; Verwendung von Katalysatorsäuren mit pK $\leq$4 (so z.B. $H_2SO_4$,HCl und Sulfaminsäure). Vielfach wird
2-stufig kondensiert, wobei die Vorkondensation und die Endkondensation
bei verschiedenen pH-Werten durchgeführt werden. In manchen Fällen
erfolgt die Vorkondensation zunächst mit einer Teilmenge des vorgesehenen Harnstoffs, woran sich nach Zugaben der restlichen Harnstoffmenge die Endkondensation ausschliesst. Die Vorkondensation führt
im allgemeinen zu einem im Wasser gelösten Polymer, während durch die
2. Stufe der Kondensation das endgültige unlösliche UF-Weisspigment
erhalten wird. Nach Abtrennung des UF-Weisspigmentes (beispielsweise
durch Filtration) und Trocknung desselben wird im allgemeinen noch
einmal mechanisch zerkleinert. Hierfür ist besonders eine Luftstrahlmühle geeignet.

In den nachfolgenden Beispielen wird die Erfindung näher erläutert. Werden dabei "Teile" angegeben, so sind in jedem Falle
"Gewichtsteile" gemeint.

- 7 -

## Beispiele

α)   <u>Herstellung von UF-Weisspigmenten</u>

<u>Beispiel a)</u> <u>UF-Weisspigment A</u>   315 Teile deionisiertes Wasser, 120
Teile Harnstoff und 450 Teile wässrige Formaldehydlösung (30 Gew.-%)
werden 2 Stunden bei pH = 7 und 50°C kondensiert. Man verrührt dieses
Vorkondensat rasch mit einer Lösung von 10 Teilen $H_2SO_4$ in 170 Teilen
Wasser. Es bildet sich in wenigen Sekunden ein hartes Gel, das man 2
Stunden bei 65°C belässt. Danach wird es zerkleinert, in Wasser
suspendiert, mit NaOH auf pH = 9 gestellt, abfiltriert und bei 110°C
bis zum konstanten Gewicht getrocknet. Ausbeute 228 Teile. Nach der
Passage durch eine Luftstrahlmühle resultiert ein  feines, weisses
Pulver mit einer mittleren Agglomeratgrösse von 3,7 μm. Die Abbildung
im Rasterelektronenmikroskop zeigt kugelförmige Primärpartikel von
0,8 - 1,2 μm Durchmesser.

$$Fp = 247 - 249°C \text{ (Zers.)}$$

Spez. Lichtstreuungskoeffizient:            $3000 \text{ cm}^2/g$

Porenvolumen:            $1,71 \text{ cm}^3/g$

<u>Beispiel b)</u> <u>UF-Weisspigment B</u> Man stellt ein Vorkondensat aus 180
Teilen Harnstoff und 300 Teilen 30 %iger wässriger Formaldehydlösung
während 2 Stunden bei pH = 7 und 50°C her. Dieses Vorkondensat wird
rasch mit einer Lösung von 25 Teilen Schwefelsäure in 170 Teilen Wasser
versetzt. Man lässt 2 Stunden bei 70°C nachreagieren und arbeitet das
Produkt so auf, wie dies im vorhergehenden Beispiel beschrieben ist.
Man erhält 230 Teile Pigment, das einen spezifischen Streuungkoeffizienten von 1500 $\text{cm}^2/g$ und ein Porenvolumen von 1,524 $\text{cm}^3/g$ aufweist. FP = 250-252°C (Zers.).

- 8 -

Beispiel c) UF-Weisspgiment C wird nach den Angaben der deutschen Offenlegungsschrift Nr. 25 47 966 der BASF AG, Beispiel Nr. 2 hergestellt, aber ebenfalls mittels einer Luftstrahlmühle auf eine Agglomeratgrösse von 3,5 $\mu$m gebracht. Eine Ramanlinie bei 810 $cm^{-1}$ zeigt die Anwesenheit von Uronringen in diesem Polymerpigment an. Es hat ein Hg-Porenvolumen von 0,86 $cm^3/g$ und einen Spezifischen Streuungskoeffizienten von 2850 $cm^2/g$. FP = 244 - 246°C (Zers.).

Beispiel d) UF-Weisspigment D Man löst 316,5 Teile Harnstoff in 966 Teilen Wasser, gibt 497 Teile einer 30 %igen wässrigen Formaldehydlösung mit einem pH-Wert von 6,2 zu und überlässt dieses Reaktionsgemisch während 2 Stunden sich selbst. Danach hat es einen pH-Wert von 8,0 und eine Temperatur von 23°C. Sodann fügt man 2000 Teile $H_2O$ und 750 Teile 1n - HCl zu. Die Temperatur steigt auf 31,5°C; man lässt 1 Stunde nachreagieren, filtriert ab, wäscht, trocknet bei 105°C und mahlt in der Luftstrahlmühle. Man erhält 359 Teile Pigment mit einem spezifischen Streuungskoeffizienten von 800 $cm^2/g$ und einem Hg - Porenvolumen von 0,89 $cm^3/g$. Fp = 249 - 250°C (Zers.)

Beispiel e) UF-Weisspigment E wird nach den Angaben von A. Renner in "Die Makromolekulare Chemie" 149, 1-27 (1971) gemäss Abschnitt 9.1 (Seite 25) hergestellt. Porenvolumen: 1,02 $cm^3/g$, spez. Streuungskoeffizient, 1000 $cm^2/g$, FP = 254-255°C (Zers.) .

Angaben über die Messmethoden

Der Lichtstreuungskoeffizient wurde nach einer graphischen Methode bestimmt. Es ist in der folgenden Publikation beschrieben: P.B. Mitton und A.E. Jacobsen "New graph for computing scattering coefficient and hiding powder", Official Digest, 35, (1963) 871-913, (USA).

Die Porenvolumina wurden mit einem Quecksilber-Druckporosimeter der Firma Carlo Erba, Milano, bestimmt. Es wurde die Methode von

- 9 -

V. Alongi angewandt; siehe Chemische Rundschau 20 (1967) 913-917.

β)    Herstellung der Dispersionsfarben

Beispiele 1 bis 5 (Dispersionsfarben für Innenanstriche) Die Zusammensetzung der Dispersionsfarben gemäss den Beispielen 1 bis 5 und dem
1. Vergleichsbeispiel ist in der Tabelle 1 beschrieben. Die Farben
werden in einer Korundscheibenmühle angerieben.

Es resultieren Farben von guten Streichviskositäten, die mit dem
Brookfield Viskosimeter bei 3 verschiedenen Umdrehungsgeschwindigkeiten
(Zylinder 5) bestimmt wurden. Es handelt sich um Nicht-Newtonsche
Flüssigkeiten. Die Viskositätswerte sind in Tabelle 2 zusammengestellt.

0016733

## Tabelle 1

Dispersionen für Innenanstriche

| Beispiel Nr. / Substanz | 1 Teile | 2 Teile | 3 Teile | 4 Teile | 5 Teile | 1.Vergl. Beispiel Teile |
|---|---|---|---|---|---|---|
| Wasser | 90 | 40 | 40 | 40 | 40 | 60 |
| Pigmentverteiler A (R) | 1,0 | 1,0 | 1,0 | 1,0 | 1,0 | 1,0 |
| Ammoniak conc. | 1,0 | 1,0 | 1,0 | 1,0 | 1,0 | 1,0 |
| Methylcellulose 2 %ig | 100 | 100 | 100 | 100 | 100 | 100 |
| Emulan OC 20 % | 2,5 | 2,5 | 2,5 | 2,5 | 2,5 | 2,5 |
| Lackbenzin (Kp. 110-140°C) | 6,0 | 6,0 | 6,0 | 6,0 | 6,0 | 6,0 |
| Texanol (R) * | 4,0 | 4,0 | 4,0 | 4,0 | 4,0 | 4,0 |
| Titandioxid 1) | - | - | - | - | - | 30,0 |
| UF-Pigment A | 30,0 | - | - | - | 30 | - |
| UF-Pigment C | - | 30,0 | - | - | - | - |
| UF-Pigment D | - | - | 30,0 | - | - | - |
| UF-Pigment E | - | - | - | 30,0 | - | - |
| Socal P 2 (R) 2) | 125 | 125 | 125 | 125 | 125 | 150 |
| Novocal R (R) 3) | 62,5 | 62,5 | 62,5 | 62,5 | 62,5 | 75 |
| Talcum | 25,0 | 25,0 | 25,0 | 25,0 | 25,0 | 25,0 |
| Calgon N (R) (10%ig) | 12,5 | 12,5 | 12,5 | 12,5 | 12,5 | 12,5 |
| Nopco 8034 (R) | 1,0 | 1,0 | 1,0 | 1,0 | 1,0 | 1,0 |
| Acronal 290 D (R) 4) | 50,0 | 50,0 | 50,0 | 50,0 | - | 50,0 |
| Mowilith DM 4 (R) 5) | - | - | - | - | 50, | - |
| Totale Pigmentkonzentration (Gew.-%) | 46,9 | 52,0 | 52,0 | 52,0 | 52,0 | 53,4 |
| Gew. Verh. :Pigmente zu Bindemittel | 8,2 | 8,2 | 8,2 | 8,2 | 8,2 | 9,5 |

* Texanol (R) von Eastman Chem. ist ein 2-Dimethyl-3-hydroxy-4-methyl-pentylbutyrat.

- 11 -

Erklärung der Indices 1 bis 6 in den Tabellen 1 und 4

1)  Kronos RN 56 ®der Titangesellschaft in Leverkusen (DE)
2)  Calciumcarbonat der Solvay Werke , Solingen (DE)
3)  Calciumcarbonat der Nordbayrischen Farben und Mineralwerke, Hof an der Saale (DE)
4)  Acrylester-Styrol-Copolymer der BASF-AG
5)  Vinylacetat-Maleinsäuredibutylester-Copolymer der Farbwerke Hoechst AG
6)  Acrylester-Copolymer der Farbwerke Hoechst AG

Tabelle 2

Viskositätsmessungen

| Beispiel Nr. | 1 | 2 | 3 | 4 | 5 | 1.Vergleichs-Beispiel |
|---|---|---|---|---|---|---|
| Viskosität (cP) | | | | | | |
| bei 20 U.min$^{-1}$ | 5680 | 9800 | 11400 | 10400 | 5080 | 11200 |
| bei 50 U.min$^{-1}$ | 3310 | 5760 | 6550 | 6080 | 3266 | 6400 |
| bei 100 U.min$^{-1}$ | - | 3880 | 4360 | 4000 | - | 4300 |

Von den erhaltenen Farben werden mittels eines Filmzieh-dreiecks mit einer Aussparung von 200 µm Filme auf "Opacity Panels 07D" der Morest Co Inc., Freeport N.Y. aufgezogen und 24 Stunden an der Luft trocknen gelassen. Es resultieren weisse, matte, homogene Anstrich-filme von ca. 110 µm Dicke. An diesen Anstrichfilmen wird die Opazität (=Kontrastverhältnis) durch Remissionsmessung über dem schwar-zen und über dem weissen Feld der Farbkarte bestimmt. Weiterhin wird der Weissgrad nach Stensby gemessen. Die Messergebnisse sind in Tabelle 3 zusammengestellt.

- 12 -

Tabelle 3

Optische Messungen

| Beispiel Nr. | 1 | 2 | 3 | 4 | 5 | 1.Vergleichs-beispiel |
|---|---|---|---|---|---|---|
| Opazität (%) | 99,4 | 99,3 | 98,6 | 98,9 | 99,3 | 99,5 |
| Weissgrad über weiss | 91 | 87 | 87 | 87 | 87 | 87 |
| über schwarz | 91 | 88 | 88 | 88 | 89 | 87 |

Die Daten der Tabelle 3 zeigen, dass gleichzeitig 30 Teile Titandioxid, 25 Teile Calciumcarbonat Socal P2 und 12,5 Teile Calciumcarbonat Novocal R durch 30 Teile der erfindungsgemässen UF-Pigmente substituiert werden können, ohne dass sich die Deckkraft (Opazität) oder der Weissgrad der Dispersionsfarben signifikant verändern.

Die Dispersionsfarben nach den Beispielen 1 und 4 sowie die $TiO_2$-haltige Vergleichsfarbe werden mit etwas Cu-Phthalocyanin auf einen mittleren Blauton eingefärbt, auf Al-Bleche aufgezogen und 1000 Stunden im Whether-O-meter getestet. Danach sind die Proben 1 bis 4 nahezu unverändert, während die $TiO_2$-haltige Farbe gemäss dem 1. Vergleichsbeispiel stark ausgebleicht ist.

Die Scheuerfestigkeiten nach DIN 53778 der Anstriche gemäss Beispiel 1 und 4 betrugen 650 resp. 900 Cyclen. Vergleichs-Beispiel 1: 700 Cyclen.

Beispiele 6 bis 9 (Dispersionsfarben für Aussenanstriche)

Es werden gemäss den vorhergehenden Beispielen weitere Dispersionsfarben hergestellt, deren Zusammensetzungen in der Tabelle 4 zusammengestellt sind.

- 13 -

Tabelle 4

| Beispiel Nr. / Substanz | 6 | 7 | 8 | 9 | 2. Ver-gleichsbei-spiel |
|---|---|---|---|---|---|
| | Teile | Teile | Teile | Teile | Teile |
| Wasser | 9,8 | 9,8 | 9,8 | 9,8 | 9,8 |
| 2 %ige Lösung von Tylose 4000 [R] | 23,5 | 23,5 | 23,5 | 23,5 | 23,5 |
| Calgon 10 %ig | 2,8 | 2,8 | 2,8 | 2,8 | 2,8 |
| Nopco 8034 Ⓡ | 1,0 | 1,0 | 1,0 | 1,0 | 1,0 |
| Ammoniak conc. | 0,5 | 0,5 | 0,5 | 0,5 | 0,5 |
| Butyldiglykolacetat | 1,75 | 1,75 | 1,75 | 1,75 | 1,75 |
| Lackbenzin (Kp.110-140°C) | 2,75 | 2,75 | 2,75 | 2,75 | 2,75 |
| $TiO_2$ Kronos RN 56 | 45,2 | 32,0 | 45,2 | 32,00 | 56,5 |
| Socal P2 Ⓡ 2) | 17,8 | – | 17,9 | – | 33,0 |
| UF-Pigment A | 11,3 | 24,5 | – | – | – |
| UF-Pigment B | – | – | 17,8 | 24,5 | – |
| Talkum | 9,5 | 9,5 | 9,5 | 9,5 | 9,5 |
| Kaolin | 14,0 | 14,0 | 14,0 | 14,0 | 14,0 |
| Mowilith DM 771 Ⓡ 6) | 94,5 | 94,5 | 94,5 | 94,5 | 94,5 |
| Totale Pigmentkonzentration (Gew.-%) | 41,7 | 36,4 | 41,7 | 36,4 | 45,3 |
| Gew.Verh.: Pigment zu Bindemittel | 2,07 | 1,69 | 2,07 | 1,69 | 2,40 |

Es ergeben sich die in Tabelle 5 zusammengestellten Streich-viskositäten.

Tabelle 5

Viskositätsmessungen (Brookfield)

| Viskosität \ Beispiel Nr. | 6 | 7 | 8 | 9 | 2.Vergleichs-beispiel |
|---|---|---|---|---|---|
| cP bei 10 U.min$^{-1}$ | 25.600 | 32.960 | 30.880 | 20.640 | 28.400 |
| cP bei 20 U.min$^{-1}$ | 14.700 | 19.200 | 15.680 | 12.000 | 16.400 |
| cP bei 50 U.min$^{-1}$ | 7.500 | 9.700 | 8.640 | 6.110 | 8.000 |

Wie in den Beispielen 1-5 wurden 110-120 $\mu$m -Filme auf den sogenannten "Opacity Panels" O7P aufgezogen und daran folgende optische
Eigenschaften bestimmt:

Tabelle 6

Optische Messungen an Innenanstrichen

| Beispiel Nr | 6 | 7 | 8 | 9 | 2.Vergleichs-beispiel |
|---|---|---|---|---|---|
| Opazität % | 99,9 | 98,4 | 98,7 | 97,0 | 98,4 |
| Weissgrad | | | | | |
| über weiss | 82 | 80 | 81 | 80 | 82,0 |
| über schwarz | 82 | 81 | 82 | 81 | 83,0 |

Wie man sieht, führt der Ersatz von 24,5 Teilen $TiO_2$ und 33,0
Teilen $CaCO_3$ durch 24,5 Teile UF-Weisspigment A oder B zu keiner
Verschlechterung von Opazität und Weissgrad.

Patentansprüche

1.      Wässrige Dispersionsfarben, enthaltend emulgierte oder suspendierte organische Bindemittel, ein festes Harnstoff-Formaldehyd-Kondensationspolymer als Weisspigment und gegebenenfalls weitere anorganische Pigmente und/oder Füllstoffe und übliche Hilfsmittel, dadurch gekennzeichnet, dass das feste Harnstoff-Formaldehyd-Kondensationspolymer

einen Lichtstreuungskoeffizienten $\geqslant$ 800 $cm^2/g$,

ein Porenvolumen von $\leqslant 3$ $cm^3/g$,

einen mittleren Primärpartikel-Durchmesser von 0,2 - 2 $\mu m$,

einen Schmelzbereich (bei Zersetzung) von 240 - 260 °C

und ein Schüttgewicht von 100 g/l

aufweist.

2.      Dispersionen nach Anspruch 1, dadurch gekennzeichnet, dass sie als organische Bindemittel ein Polymer oder mehrere aus der Gruppe Polyvinylacetat, Polyvinylchlorid, Polyvinylidenchlorid und die entsprechenden Copolymeren, Acrylpolymere und Copolymere, beispielsweise mit Styrol, und Styrol-Butadien-Copolymere und Butadien-Acrylnitril-Copolymere in Form von Latices enthalten.

3.      Dispersionsfarben nach Anspruch 1, dadurch gekennzeichnet, dass sie als zusätzliche anorganische Pigmente und/oder Füllstoffe einen Stoff oder mehrere aus der Gruppe $CaCO_3$, $MgCO_3$, Kaolin, Talk, Glimmer, Zinkweiss, Schwerspat und $TiO_2$ (Rutil oder Anatas) enthalten.

4.      Dispersionsfarben nach Anspruch 1, dadurch gekennzeichnet, dass sie als zusätzliches anorganisches Pigment $TiO_2$ enthalten, wobei das Gewichtsverhältnis $TiO_2$:Harnstoff-Formaldehyd-Kondensationspolymer kleiner als 4 ist.

5.      Vorzugsweise für Aussenanstriche geeignete Dispersionsfarben nach Anspruch 4, dadurch gekennzeichnet, dass das Gewichtsverhältnis von Pigment zu organischem Bindemittel 1,5 bis 4 beträgt.

6.    Dispersionsfarben nach Anspruch 1, dadurch gekennzeichnet, dass sie als Weisspigment nur das Harnstoff-Formaldehyd-Kondensationspolymer enthalten.

7.    Dispersionsfarben nach Anspruch 1, dadurch gekennzeichnet, dass sie als Weisspigment ein Harnstoff-Formaldehyd-Kondensationspolymer enthalten, das in Abwesenheit von Schutzkolloiden hergestellt wurde.

8.    Vorzugsweise für Innenanstriche geeignete Dispersionfarben nach Anspruch 6, dadurch gekennzeichnet, dass das Gewichtsverhältnis Pigment zu organischem Bindemittel 4 bis 10 beträgt.

0016733

| Europäisches Patentamt | EUROPÄISCHER RECHERCHENBERICHT | Nummer der Anmeldung<br>EP 80810094.5 |
|---|---|---|

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| A,D | US - A - 3 737 404 (GREGOR BERN-STEIN)<br><br>+ Gesamt +<br><br>-- | 1-3 | C 09 D 5/02<br>C 09 D 3/727//<br>(C 09 D 5/02<br>C 08 G 12/12) |
| A,D | US - A - 3 836 495 (GREGOR BERN-STEIN)<br><br>+ Gesamt +<br><br>---- | 1-3 | |
| | | | **RECHERCHIERTE SACHGEBIETE (Int. Cl. 3)**<br><br>C 08 K<br>C 09 D |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort<br>WIEN | Abschlußdatum der Recherche<br>16-06-1980 | Prüfer<br>PAMMINGER |
|---|---|---|

EPA form 1503.1 06.78